(19) **Europäisches Patentamt**
**European Patent Office**
**Office européen des brevets**

(11) **EP 1 739 455 A1**

(12) **EUROPEAN PATENT APPLICATION**

(43) Date of publication:
**03.01.2007 Bulletin 2007/01**

(51) Int Cl.:
***G01S 15/89*** (2006.01)

(21) Application number: **05291354.8**

(22) Date of filing: **23.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **I.N.S.E.R.M. Institut National de la Sante et de
la Recherche Medicale
75654 Paris Cedex 13 (FR)**

(72) Inventor: **Bouakaz, Ayache
37000 Tours (FR)**

(74) Representative: **Burbaud, Eric
Cabinet Plasseraud
52 rue de la Victoire
75440 Paris Cedex 09 (FR)**

(54) **Chirp reversal ultrasound contrast imaging**

(57)     The invention relates to a method for detecting and imaging ultrasound echo signals returned from a target object comprising microbubbles, said microbubbles being characterized by a resonance frequency, said method comprising the steps of irradiating said target object with at least a first and second successive excitation signals, said first excitation signal being a sweep of increasing frequency with time, and said second excitation signal being a sweep of decreasing frequency with time, detecting echo signals of said first and second excitation signals from said target object, and, combining said echo signals. The maximum frequencies of said first and second excitation signals are lower than said resonance frequency. The invention also relates to an imaging apparatus.

FIG. 10

## Description

The present invention generally relates to ultrasonic diagnosis of the body using ultrasound contrast imaging techniques, and in particular to methods and apparatuses using ultrasound contrast agents (UCA).

Over the past decade, contrast agents in the form of tiny gas bubbles were introduced to improve the image quality. The gas bubbles are infused into the region of interest to increase the backscattered echoes from the desired organs to clearly distinguish them from the echoes returned from other organs. Gases have been stabilized in solutions in the form of tiny microbubbles.

To extend the utility of ultrasound contrast imaging, research has been actively focused in developing efficacious UCA and new contrast-specific imaging techniques. Second harmonic based techniques enhance the detection of UCA within many structures such as the cardiac chambers. They exploit the differences between the response of gas microbubbles and tissue to ultrasound irradiation. Soft tissues are known to be linear reflectors whereas contrast bubbles exhibit a nonlinear or harmonic behavior when interacting with ultrasound waves.

Techniques have been developed to image tissues at second harmonic (2H) frequency even without contrast bubbles injection. That specific frequency turns out to improve image quality considerably. This mode, called native tissue harmonic imaging, has demonstrated advantages in various clinical applications. Recent studies have shown that imaging contrast bubbles and tissue at 2H frequency only is associated with some disadvantages. Higher harmonic frequencies were then suggested as a way to increase the ability to detect or discriminate between contrast gas bubbles and surrounding scattering medium. Such approaches have shown promising in vitro and in vivo results.

However substantial research efforts still need to be undertaken to use UCA in the assessment of myocardial perfusion. New contrast imaging methods such as pulse inversion and power modulation are now effectively used for left ventricular opacification (LVO) but have shown limited success to detect myocardial perfusion in echocardiography with "difficult-to-image" patients.

Hence new imaging methods must be investigated based on the unique acoustic properties of gas microbubbles. The ultimate perfusion technique should be able to ascertain the suppression of the strong (linear or nonlinear) tissue echoes while increasing the bubble echoes and allowing a strong contrast-to-tissue ratio. The discrimination between non-perfused tissue and contrast-perfused tissue is usually referred to as contrast-to-tissue ratio.

Therefore, an object of the present invention is to offer an improved method for contrast agent detection over the known methods. Another object of the present invention is to offer an improved apparatus for contrast agent detection.

Accordingly, the present invention provides a method for detecting and imaging ultrasound echo signals returned from a target object comprising microbubbles according to claim 1. The present invention further provides an apparatus for ultrasound imaging according to claim 9.

The invention takes advantage of the resonance behavior of gas microbubbles. Echoes from oscillating microbubbles excited with frequencies proximate their resonance frequency are detected and sorted out (eliminated) from echoes emanating from non oscillating structures such as tissues.

Other features and advantages of this invention will further appear in the hereafter description when considered in connection to the accompanying drawings, wherein:

> FIG. 1 illustrates the resonance frequency of a gas microbubble as a function of its size;
> FIG. 2 illustrates the scattering cross section, i.e. the scattering strength of a microbubble, in this case for a 3μm diameter bubble;
> FIGS. 3 to 5 illustrate the excitation signal (top panel) as well as the scattered signal (lower panel) from a 3μm bubble when excited with an acoustic signal with a frequency below, close or above the resonance frequency of the bubble;
> FIG. 6 illustrates an exemplary up-sweep frequency signal used in the method according to the present invention;
> FIG. 7 illustrates an exemplary down-sweep frequency signal used in the method according to the present invention; containing the same frequency bandwidth as signal in FIG. 6.
> FIG. 8 illustrates the response of a microbubble to the excitation signal of FIG. 6;
> FIG. 9 illustrates the response of a microbubble to the excitation signal of FIG. 7;
> FIG. 10 illustrates the transmitted first and second signals (upper panel), as well as the microbubble responses (lower panel);
> FIG. 11 illustrates an exemplary combination of the echo signals in the combination step of the method according to the invention;
> FIG. 12 illustrates a linear and a quadratic modulation of an up-sweep frequency signal used in the method according to the present invention; and,
> FIG. 13 illustrates an apparatus according to the present invention.

The gaseous or gas microbubbles present in the target object can either be from an injected or assimilated UCA, or in case of a gaseous embolism, the emboli.

The method according to the invention is based on the resonance behavior of such gas microbubbles. When a gas microbubble is hit by an ultrasound wave, it oscillates and therefore irradiates ultrasound energy. The bubble compresses and expands depending on the phase of the ultrasound wave. An oscillating bubble can be compared to a harmonic oscillator and can thus be characterized by a natural resonance frequency. The resonance frequency of a bubble was defined by Minnaert and given by the formula:

$$f_r = \frac{1}{2\pi R} \sqrt{\frac{3\gamma P_0}{\rho}} \quad (1)$$

where:

R is the resting radius,
$\gamma$ is the polytropic component,
$P_O$ is the ambient pressure, and,
$\rho$ is the density of the medium.

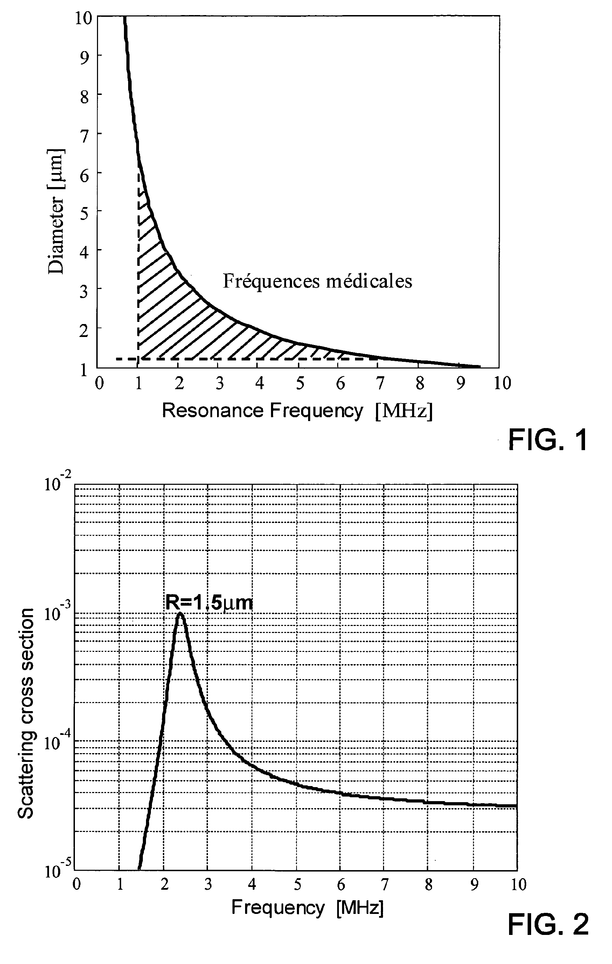

This expression shows that the resonance frequency of a bubble is inversely proportional to its size. Figure 1 shows the resonance frequency of a gas microbubble as a function of its size. For a 6$\mu$m diameter bubble, its resonance frequency would be approximately 1 MHz.

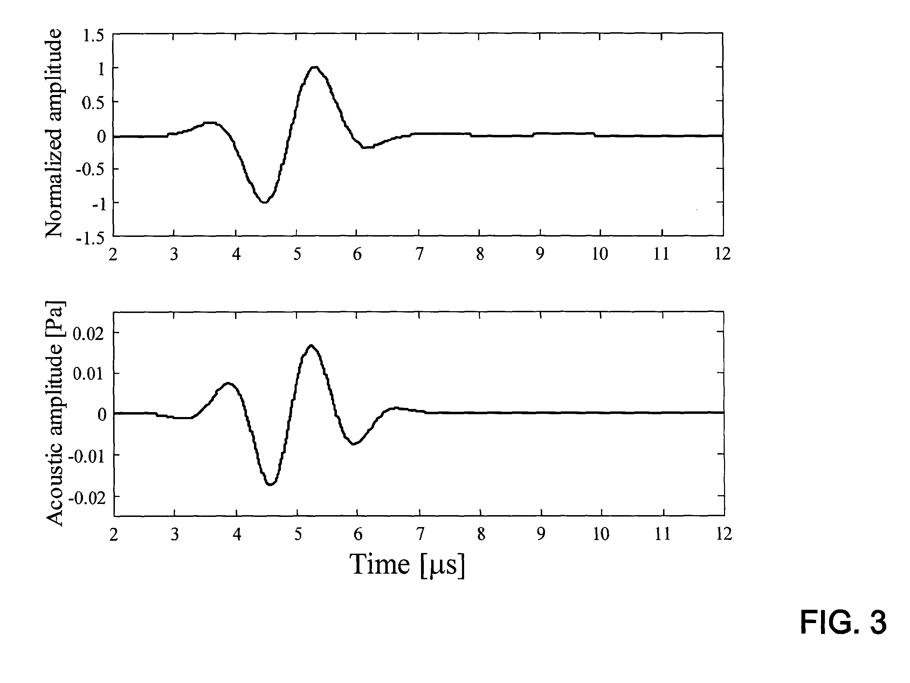

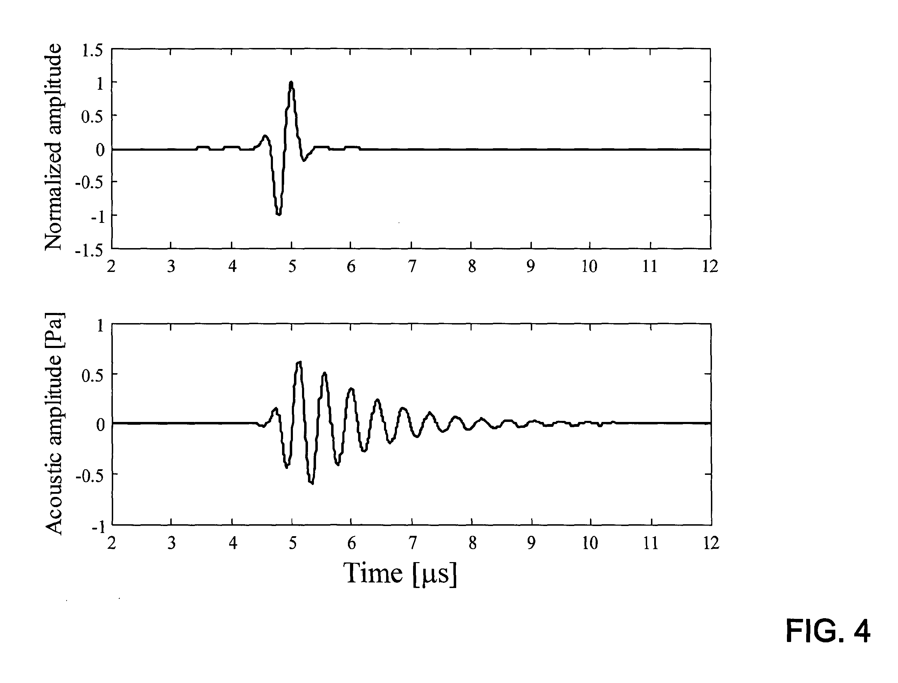

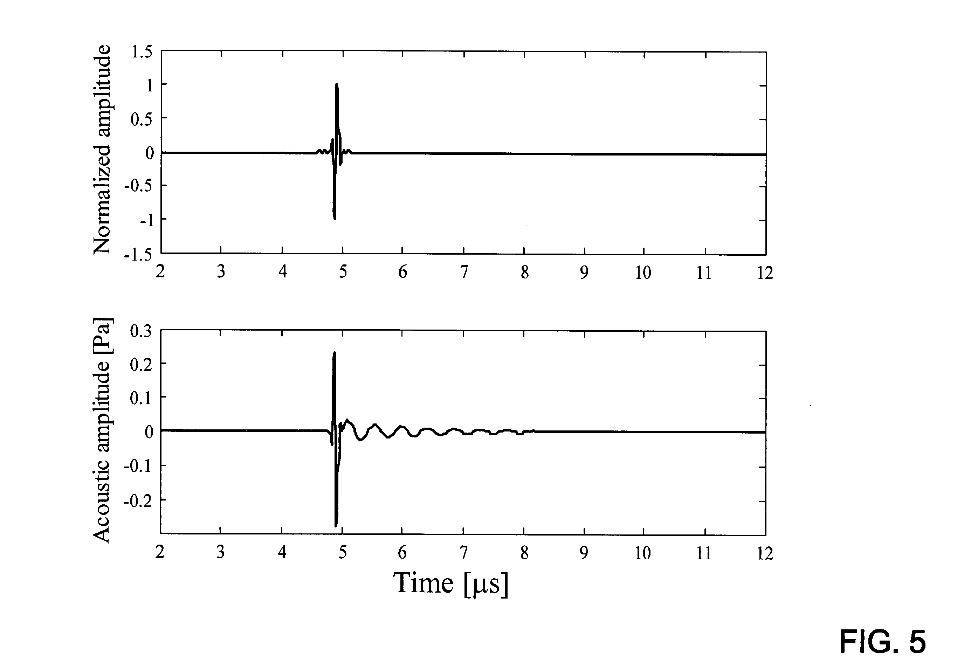

When a microbubble is excited at its resonance frequency, its oscillations are maximal and therefore the scattered echo signal will be strengthened. Figure 2 shows the scattering cross section which represents the scattering strength of a microbubble, in this case for a 3$\mu$m diameter bubble. The curve shows a maximum which occurs at a frequency equal to its resonance frequency. In addition to being strong, the length of the scattered signal is increased due to the resonance behavior of the bubble. Examples are given in figs 3, 4 and 5. Figure 3 shows in the top panel the excitation signal and in the lower panel the scattered signal from a bubble of 3$\mu$m in diameter when excited with an acoustic signal with a frequency below the resonance frequency of the bubble. The bubble response shows approximately the same length as the transmitted signal. Figure 4 shows the transmitted signal and the response of a resonating bubble. One can appreciate first the high amplitude of the scattered signal and second the length of the signal which increased significantly due to the resonance behavior of the microbubble. Hence, after the excitation signal has passed, the microbubble continues to oscillate freely. For a bubble excited above its resonance frequency, the result is shown in fig. 5 where one can notice lower scattered amplitude in addition to a much shorter signal response.

Therefore for a microbubble excited at or close to its resonance frequency, it scatters ultrasound energy very efficiently and shows a much longer pulse response.

For a non-oscillating structure, such as tissue, the acoustic response will be of the same length as the excitation signal since no resonance behavior is observed from a non-oscillating scatterer.

Microbubbles that are injected as a UCA show a wide range of sizes, typically 1 to 5$\mu$m, and up to 10$\mu$m, or lower than 1$\mu$m. This could a priori make it difficult to define such a resonance frequency for the UCA bubbles. Nevertheless, test results show that the whole microbubbles behave with a dominant resonance frequency, as if all microbubbles were of the same size. In the following description of the method according to the invention, the resonance frequency of the UCA will be defined as this dominant resonance frequency. Such a resonance frequency is typically in the range of 1 MHz to a few 10MHz. Vascular ultrasound frequencies range from 1to 5MHz. Intravascular ultrasound frequencies range from 10 to 40 MHz, the related microbubbles sizes would then be lower than 1$\mu$m. To take advantage of these resonance characteristics of the gas microbubbles, a sequence of two signals, both containing several frequency components, is transmitted in the method according to the invention. Therefore, to detect and image ultrasound echo signals returned from a target object comprising microbubbles, the target object is irradiated with at least a first and second successive excitation signals, the first excitation signal being a sweep of increasing frequencies with time or up-sweep frequency signal, while the second excitation signal being a sweep of decreasing frequencies with time, or down-sweep frequency signal.

The frequency bandwidth of each signal has a frequency sweep that covers frequencies from below the resonance frequency of the investigated bubbles up to frequencies close to the resonance frequency of the investigated bubble. Thus the maximum frequencies of the first and second excitation signals are lower than the resonance frequency of the microbubbles. The echo signals from the first and second excitation signals are then detected coming from the target object, and, then combined.

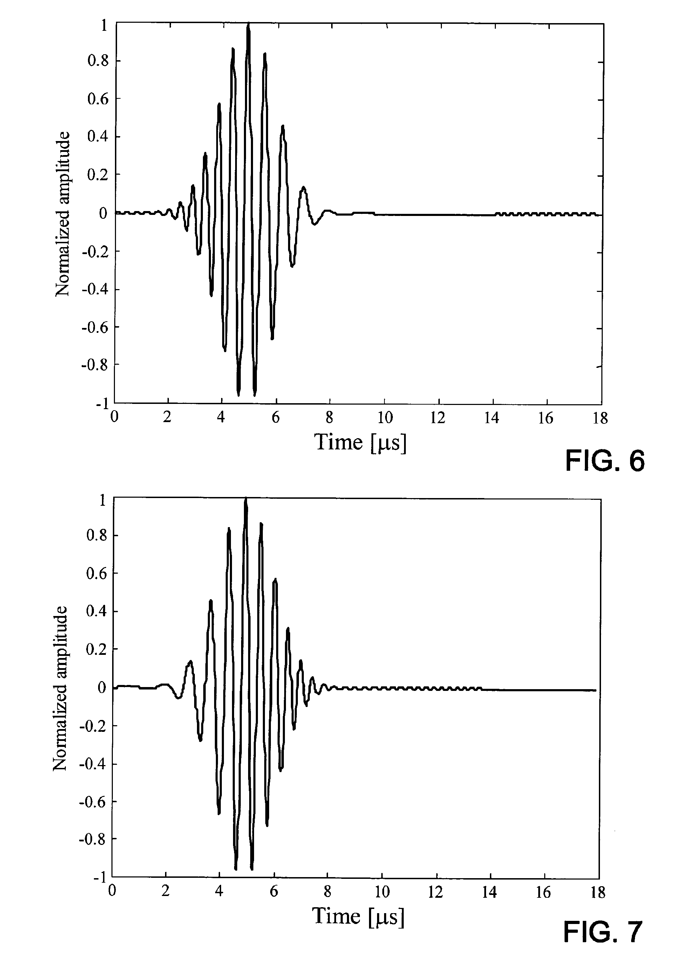

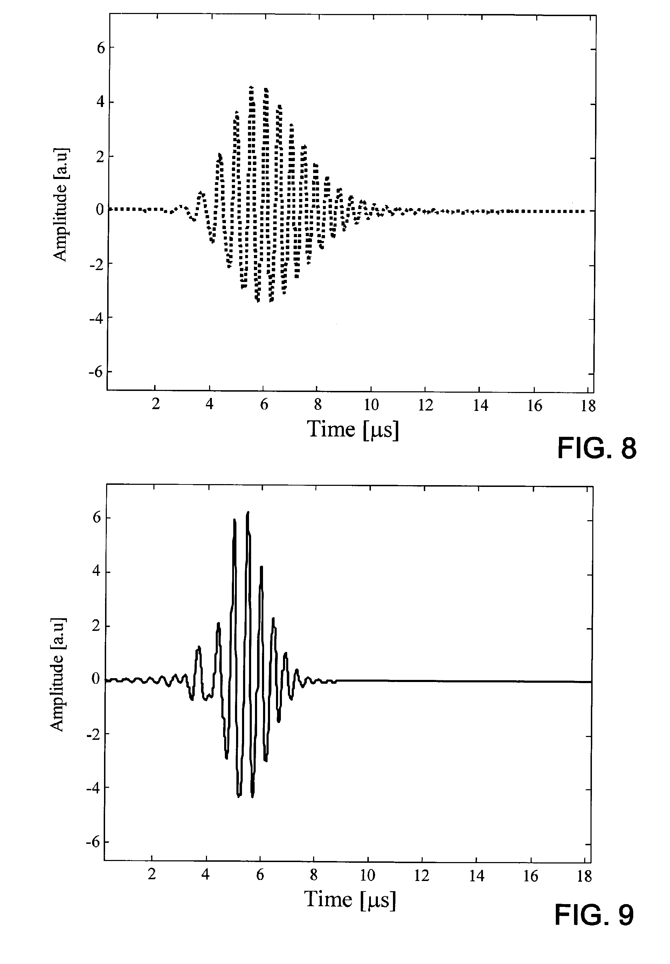

Depending on the frequency sweep used in the transmit signal, the bubble responds differently. When using the first signal, i.e. a frequency sweep of increasing frequencies with time as shown in FIG. 6, the microbubble will be interrogated first by frequencies below its resonance frequency and then by the high-frequency component at the end of the transmitted pulse. Since the high frequency component of the transmitted signal is closer to its resonance frequency, the bubble will resonate and oscillate freely at the end of the signal. This is shown in FIG. 8 by an elongated pulse response. As the frequency is approaching the resonance frequency, the microbubble will accumulate more energy and the effect of the transmitted signal will be cumulative.

In the case of the second signal, i.e. a down-sweep frequency signal as seen in FIG. 7, the high frequency components are transmitted first and these high frequency components correspond, to the resonance frequency of the microbubble. Therefore the resonance behavior of the bubble due to these high frequency components is initiated but only for a very short time since the low frequency components (away from resonance) follow immediately and override the initiated resonance response. The free oscillations are then canceled immediately and the bubble responds to the following lower frequency components (away from resonance), giving thus a shorter overall echo response. As the frequencies of the signal decrease with time, the cumulative effect is reduced compared to the one of the up-sweep frequency signal.

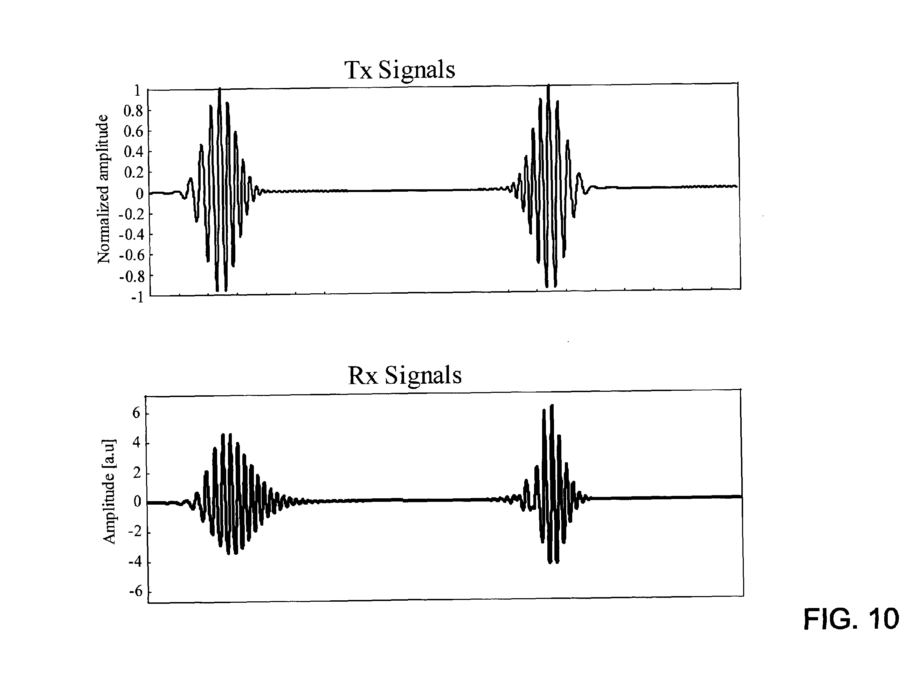

Fig. 10 illustrates in the upper panel the transmit sequence containing the first signal and then the second replica which has been time reversed. In the lower panel the predicted bubble's response to the transmit sequence is given.

As the chosen frequency sweeps are specific to the microbubbles and their resonance frequency, non-oscillating and non-resonating scatterers, such as tissues, respond very differently from microbubbles, and display very similar responses to both up-sweep and down-sweep excitations. Indeed, when submitted to a frequency away from the resonance frequency, both other scatterers (tissues) and the microbubbles will exhibit short oscillating responses (as in FIG. 3), their response showing approximately the same length as the excitation signal, whether the frequency is increasing or decreasing. Closer to the resonance frequency of the microbubbles, tissues will exhibit similar response whether the frequency is increasing or decreasing while the microbubbles will not as explained before.

The difference in behaviors between microbubbles and other scatterers allow through a proper combination to image the target object. After the echo signals from the first and second transmitted signals are detected, a combination is performed to image these echo signals and the target object. The combination performed ought to take into account the respective shapes of the first and second signal.

In a preferred embodiment of the method according to the invention, the maximum frequency of the first (up-sweep) and second (down-sweep) excitation signals are identical. In an additional embodiment, the frequency components of both transmitted signals are identical, i.e. the first and the second excitation signals have identical frequency sweeps. In the example of FIG. 6 and 7, the first and second signals are time reversed replica of each other. Both transmit signals have the same total frequency bandwidth and the same acoustic pressure. FIG. 6 is a chirped signal with an increasing frequency sweep while FIG. 7 is exactly the same signal but with a decreasing frequency sweep.

A theoretical model describing the dynamic of gas bubbles was used to calculate the bubble response to both transmitted signals. The model is based on the popular Rayleigh-Plesset equation. In the simulations, a free bubble of $3\mu$m diameter was considered and the applied acoustic pressure was 50kPa at 1.8MHz.

The results are shown in FIG. 8 and 9. FIG. 8 shows the echo scattered from the gas microbubble when insonified (irradiated) with the signal shown in FIG.

6. FIG. 9 shows the bubble's response when insonified with the signal shown in FIG. 7. Depending on the frequency sweep used in the transmit signal, the bubble will respond differently. When using signal shown in FIG. 6, the frequency sweep is increasing with time, and the cumulative effect mentioned before brings a longer response (elongated pulse response in FIG. 8) with large oscillations as the bubble will resonate and oscillate freely at the end of the up-sweep signal. With the down-sweep frequency signal, the resonance behavior of the bubble due to these high frequency components is initiated first but only for a very short time as the lower frequency components follow and override the initiated resonance response. FIG. 9 illustrates such a shorter overall echo response. FIG. 10 illustrates in the upper panel the transmit sequence containing the first signal and then the second signal which is a time reversed replica of the first one. In the lower panel the predicted bubble's response to the transmit sequence is given.

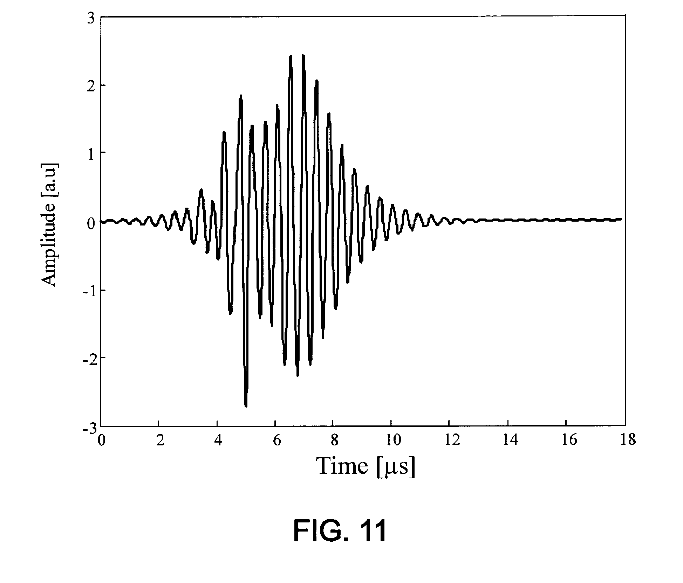

With such transmit signal as in FIG. 10, one of the simplest ways of detecting the differences between the responses to increasing or decreasing sweep excitations is the subtraction of both responses. The result of subtracting the echoes is shown in FIG. 11. A strong signal is obtained in this case due to the different responses to the up and down sweep signals of the microbubbles. The same subtraction would show a negligible signal for other scatterers such as tissues.

Other detection methods can be used such as the well known correlation methods, as described for example in patent GB2404024, or any other suitable signal processing techniques.

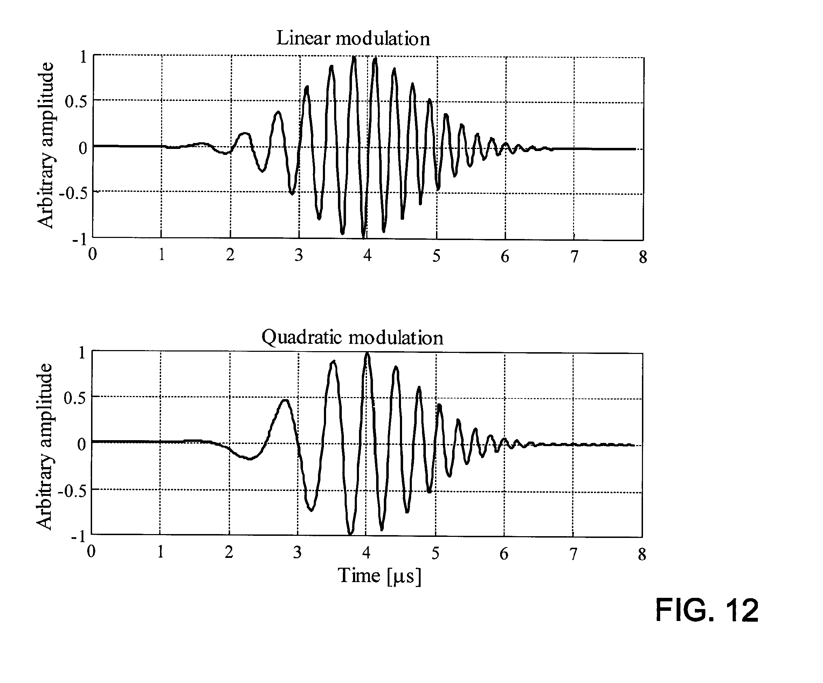

In order to maximize the resonance behavior of the microbubbles, the maximum frequencies of the first and second signals ought to be higher than 90% of the resonance frequency of the microbubbles. In an improved embodiment of the method according to the invention, the maximum frequency is higher than 98% of the resonance frequency of the microbubbles. The frequency sweeps can be chosen specific functions of time, for example, the sweep of frequencies can be linear or non linear functions of time, i.e. the frequency sweep are linear or non linear modulation. In the examples of FIG. 6 and 7, the up and down sweep are chosen as linear functions of time, centered on a base frequency that is the mean value of the frequency sweep upper and lower bounds. In FIG. 12, a linear and a quadratic (as an example of a non linear modulation) modulation are shown.

The up and down frequency signal duration is typically of a few $\mu$s, and more specifically in the 4-6 $\mu$s range, as in the examples of FIG. 6 and 7. If suitable, longer chirp signals up to 10$\mu$s may be used. The duration between the successive first and second signal ought to be enough to avoid any interferences between the echo signal from the up sweep signal and the down sweep signal. The amplitude of the transmitted signals, as in the example mentioned before, may be of a few 10kPa.

The echo signals received from the bubbles might be too long (due to the resonance behavior) and might not be used as such for imaging. However compression techniques can be used to create signals that are more suited to imaging purposes. Such techniques are known from Misaridis TX, Gammelmark K, Jorgensen CH, Lindberg N, Thomsen AH, Pedersen MH, Jensen JA. in "Potential of coded excitation in medical ultrasound imaging", Ultrasonics. 2000 Mar, 38(1-8):183-9, and from Borsboom JM, Chin CT, de Jong N. in "Nonlinear coded excitation method for ultrasound contrast imaging", Ultrasound Med Biol. 2003 Feb, 29(2):277-84.

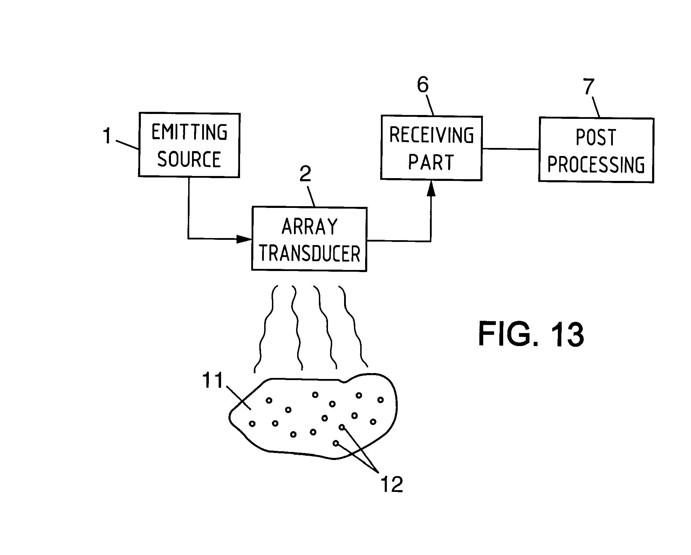

In FIG. 13, an apparatus for ultrasound imaging according to the invention is shown. A pulse generator or transmit source 1 is adapted to produce the up and down frequency sweeps as described here before, and to direct them onto a target object 11 in a system under investigation. The pulse generator 1 is connected to an array transducer 2 for generating ultrasound signals that are directed into the target object 11 that contains the microbubbles 12. The transmit source 1 and the array transducer 2 are irradiating means. Ultrasound echo signals received from the target object 11 are sensed by transducer array 2 and received at receiver 6 connected thereto, acting as receiving means. The received echo signals are analyzed, combined and processed by post processing circuits 7.

The different up and down sweep signals shown in FIG. 6, 7, 10 and 13 are characterized by a Gaussian envelope. This is due to the frequency response of typical array transducers such as array transducer 2. Other envelope shapes can be used as well.

The advantages of the method are first a better sensitivity to the contrast microbubbles. The method presents a cancellation of echoes emanating from tissue while amplifying the bubbles echoes, and increasing by the same token the contrast to tissue ratio. In addition, the method can operate in a full linear mode and therefore take advantage of the full transducer frequency bandwidth. Such a method for ultrasound contrast imaging can operate over the full transducer frequency bandwidth. The method could also operate in nonlinear regime such as second harmonic or superharmonic (see W003059169) but then will scarify the transducer bandwidth except with a dedicated transducer.

The method can also be combined with current contrast imaging methods such as pulse inversion (as defined in document US5706819, which consists in sending a pulse signal followed by a second pulse of a different polarity and detecting and combining the harmonic responses to the first and second pulses) and/or power modulation.

A problem may arise when using the method according to the invention in moving tissues. Indeed, the tissue that contains the microbubbles can move in between the first and second irradiated signals. Artifacts might appear as a result when combining the echo signals to image the target object. Such artifacts can advantageously be reduced by sending several up and down sweep frequency signals as described before. Through specific combination of the resulting echo signals, the movements of the tissue can be corrected, thus improving the imaging resolution. Such a method is known from "NONLINEAR IMAGING", Peter N. BURNS,* David HOPE SIMPSON* and Michalakis A. AVERKIOU, Ultrasound in Med. & Biol., Vol. 26, Supplement 1, pp. S19-S22, 2000.

The method according to the invention is also applicable to emboli detection since gas emboli consist of gaseous microbubbles. The transmitted signals should be adapted accordingly.

**Claims**

1. A method for detecting and imaging ultrasound echo signals returned from a target object comprising microbubbles, said microbubbles being **characterized by** a resonance frequency, said method comprising the steps of:

   - irradiating said target object with at least a first and second successive excitation signals, said first excitation signal being a sweep of increasing frequency with time, and said second excitation signal being a sweep of decreasing frequency with time,
   - detecting echo signals of said first and second excitation signals from said target object, and,
   - combining said echo signals

   wherein the maximum frequencies of said first and second excitation signals are lower than said resonance frequency.

2. A method according to claim 1, wherein the maximum frequency of the first and second excitation signals are identical.

3. A method according to any of the previous claims, wherein the first and the second excitation signals have identical frequency sweep.

4. A method according to any of the previous claims, wherein the second excitation signal is the time reversed replica of the first excitation signal.

5. A method according to any of the previous claims, wherein the maximum frequencies of the first and second signals are higher than 90% of the resonance frequency of the microbubbles.

6. A method according to the previous claim, wherein the maximum frequencies of the first and second signals are higher than 98% of the resonance frequency of the microbubbles.

7. A method according to any of the previous claims, wherein the sweeps of frequency are linear functions of time.

8. A method according to any of the claims 1 to 7, wherein the sweeps of frequency are non linear functions of time.

9. An apparatus for ultrasound imaging of a target object comprising microbubbles, said microbubbles being **characterized by** a resonance frequency, said apparatus comprising:

   - irradiating means (1, 2) to irradiate said target object with at least a first and second successive excitation signals, said first excitation signal being a sweep of increasing frequency with time, and said second excitation signal being a sweep of decreasing frequency with time,
   - detecting means (6) to detect echo signals of said first and second excitation signals from said target object, and,
   - combining means (7) to combine said echo signals

   wherein the maximum frequencies of said first and second excitation signals are lower than said resonance frequency.

10. An apparatus according to claim 10, wherein the maximum frequency of the first and second excitation signals are identical.

11. An apparatus according to one of the previous claim 9 and 10, wherein the first and the second excitation signals have identical frequency sweep.

12. An apparatus according to one of the previous claims 9 to 11, wherein the second excitation signal is the time reversed replica of the first excitation signal.

13. An apparatus according to one of the previous claims 9 to 12, wherein the maximum frequencies of the first and second signals are higher than 90% of the resonance frequency of the microbubbles.

14. An apparatus according to the previous claim, wherein the maximum frequencies of the first and second signals are higher than 98% of the resonance frequency of the microbubbles.

15. An apparatus according to one of the previous claims 9 to 14, wherein the sweeps of frequency are linear functions of time.

16. An apparatus according to any of the claims 9 to 14, wherein the sweeps of frequency are non linear functions of time.

FIG. 1

FIG. 2

FIG. 3

FIG. 4

EP 1 739 455 A1

FIG. 5

**FIG. 6**

**FIG. 7**

FIG. 8

FIG. 9

EP 1 739 455 A1

FIG. 10

FIG. 11

Linear modulation

Quadratic modulation

Time [μs]

FIG. 12

FIG. 13

EP 1 739 455 A1

European Patent
Office

**EUROPEAN SEARCH REPORT**

Application Number

EP 05 29 1354

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | BORSBOOM J M G ET AL: "Nonlinear coded excitation method for ultrasound contrast imaging" ULTRASOUND IN MEDICINE AND BIOLOGY, NEW YORK, NY, US, vol. 29, no. 2, February 2003 (2003-02), pages 285-292, XP004416965 ISSN: 0301-5629 * the whole document * | 1-16 | G01S15/89 |
| A | EP 1 214 910 A (JAPAN SCIENCE AND TECHNOLOGY CORPORATION) 19 June 2002 (2002-06-19) * abstract; figures 3,14 * * paragraphs [0014], [0025], [0032] - [0061] * | 1-16 | |
| A | US 2004/059225 A1 (HAO XIAOHUI ET AL) 25 March 2004 (2004-03-25) * the whole document * | 1-16 | |
| A | BORSBOOM J ET AL: "Experimental validation of a nonlinear coded excitation method for contrast imaging" PROCEEDINGS OF 2002 IEEE INTERNATIONAL ULTRASONICS SYMPOSIUM 8-11 OCT. 2002 MUNICH, GERMANY, vol. 2, 2002, pages 1933-1936, XP002350769 2002 IEEE Ultrasonics Symposium. Proceedings (Cat. No.02CH37388) IEEE Piscataway, NJ, USA * the whole document * | 1-16 | TECHNICAL FIELDS SEARCHED (Int.Cl.7)<br><br>G01S |

-/--

The present search report has been drawn up for all claims

| Place of search | Date of completion of the search | Examiner |
|---|---|---|
| Munich | 25 October 2005 | Reuss, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 05 29 1354

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | BORSBOOM J ET AL INSTITUTE OF ELECTRICAL AND ELECTRONICS ENGINEERS: "Nonlinear coded excitation method for contrast imaging" 2001 IEEE ULTRASONICS SYMPOSIUM PROCEEDINGS. ATLANTA, GA, OCT. 7 - 10, 2001, IEEE ULTRASONICS SYMPOSIUM PROCEEDINGS, NEW YORK, NY : IEEE, US, vol. VOL. 2 OF 2, 7 October 2001 (2001-10-07), pages 1729-1732, XP010584846 ISBN: 0-7803-7177-1 * the whole document * ----- | 1-16 | |
| A | BORSBOOM J M G ET AL: "Harmonic chirp imaging method for ultrasound contrast agent" IEEE TRANSACTIONS ON ULTRASONICS, FERROELECTRICS AND FREQUENCY CONTROL IEEE USA, vol. 52, no. 2, February 2005 (2005-02), pages 241-249, XP002350770 * the whole document * ----- | 1-16 | TECHNICAL FIELDS SEARCHED (Int.Cl.7) |
| A | CHIAO R Y ET AL INSTITUTE OF ELECTRICAL AND ELECTRONICS ENGINEERS: "Coded excitation for diagnostic ultrasound: a system developer's perspective" 2003 IEEE ULTRASONICS SYMPOSIUM PROCEEDINGS. HONOLULU, HAWAII, OCT. 5, vol. VOL. 1 OF 2, 5 October 2003 (2003-10-05), pages 437-448, XP010702942 ISBN: 0-7803-7922-5 * the whole document * ----- | 1-16 | |

The present search report has been drawn up for all claims

| Place of search | Date of completion of the search | Examiner |
|---|---|---|
| Munich | 25 October 2005 | Reuss, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 29 1354

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2005

| Patent document cited in search report | | Publication date | Patent family member(s) | | Publication date |
|---|---|---|---|---|---|
| EP 1214910 | A | 19-06-2002 | AU | 7443800 A | 24-04-2001 |
| | | | CA | 2383515 A1 | 29-03-2001 |
| | | | CN | 1374845 A | 16-10-2002 |
| | | | DE | 60020724 D1 | 14-07-2005 |
| | | | WO | 0121074 A1 | 29-03-2001 |
| | | | US | 6730029 B1 | 04-05-2004 |
| US 2004059225 | A1 | 25-03-2004 | CN | 1494874 A | 12-05-2004 |
| | | | EP | 1406096 A1 | 07-04-2004 |
| | | | JP | 2004113788 A | 15-04-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2404024 A
- WO 03059169 A
- US 5706819 A

### Non-patent literature cited in the description

- **MISARIDIS TX ; GAMMELMARK K ; JORGENSEN CH ; LINDBERG N ; THOMSEN AH ; PEDERSEN MH ; JENSEN JA.** Potential of coded excitation in medical ultrasound imaging. *Ultrasonics,* March 2000, vol. 38 (1-8), 183-9
- **BORSBOOM JM ; CHIN CT ; DE JONG N.** Nonlinear coded excitation method for ultrasound contrast imaging. *Ultrasound Med Biol.,* February 2003, vol. 29 (2), 277-84
- **PETER N. BURNS ; DAVID HOPE SIMPSON ; MICHALAKIS A. AVERKIOU.** NONLINEAR IMAGING. *Ultrasound in Med. & Biol.,* 2000, vol. 26 (1), S19-S22